Europäisches Patentamt

European Patent Office

Office européen des brevets

(19)

(11) **EP 0 695 938 A1**

(12) **DEMANDE DE BREVET EUROPEEN**

(43) Date de publication:
**07.02.1996 Bulletin 1996/06**

(51) Int Cl.⁶: **G01N 25/48**, G01N 25/18

(21) Numéro de dépôt: **95401821.4**

(22) Date de dépôt: **03.08.1995**

(84) Etats contractants désignés:
**DE FR GB**

(30) Priorité: **03.08.1994 FR 9409594**

(71) Demandeur: **HISPANO-SUIZA**
**F-92213 Saint Cloud (FR)**

(72) Inventeur: **Chayrigues, Henri François**
**F-95300 Pontoise (FR)**

(54) **Procédé de détermination du pourcentage d'un constituant d'un matériau composé d'au moins deux constituants distincts**

(57) L'invention est relative à un procédé de détermination du pourcentage d'un constituant d'un matériau composé de deux constituants distincts.

Selon l'invention, on détermine la capacité thermique d'un échantillon (EI) du matériau et, à partir de la connaissance de la capacité thermique de chacun des constituants, on calcule une première différence entre les capacités thermiques de l'échantillon (EI) et du constituant (CC1), et, une deuxième différence entre les capacités thermiques des deux constituants du matériau, et, on détermine le pourcentage dudit constituant en calculant le rapport de la première à la deuxième différence.

Une application est la réalisation d'un appareil spécialisé de détermination rapide et fiable de la composition d'un matériau.

FIG.1

## Description

Lors de la production d'un certain nombre de matériaux comprenant au moins deux constituants, il est utile de connaître la composition du matériau au cours de son élaboration, afin de pouvoir obtenir le matériau correspondant avec précision à l'utilisation envisagée. Tel est le cas, par exemple, des aciers, ou plus généralement des alliages métalliques. Tel est aussi le cas des matériaux composites constitués par une résine plastique au sein de laquelle sont placées des fibres de renforcement.

En ce qui concerne les alliages métalliques, est connu un procédé d'observation de la température de l'alliage en fusion, notamment de l'abaissement de la température de solidification de l'alliage en fonction du pourcentage d'éléments complémentaires ajoutés pour déterminer ce pourcentage. Les déterminations de pourcentages de constituants par ce procédé sont généralement longues, de mise en oeuvre malaisée, voire dangereuse. D'autres procédés existent, - chimiques, par attaques acides, ou, physiques, par pyrolyse, mesures de volume, ou de densité -, et présentent globalement des inconvénients analogues et pour certains ne prennent pas en compte les porosités.

Le besoin existe donc de pouvoir déterminer les pourcentages de la composition d'un matériau comprenant plusieurs constituants, de manière rapide, aisée. Ceci est particulièrement manifeste en ce qui concerne la teneur en fibres des matériaux plastiques composites.

Le procédé proposé a pour but de satisfaire le besoin existant et est donc essentiellement un procédé de détermination du pourcentage d'un constituant d'un matériau composé d'au moins deux constituants distincts.

Selon le procédé conforme à l'invention, on détermine la capacité thermique d'un échantillon dudit matériau ou une grandeur physique proportionnelle à cette capacité thermique, et, à partir de la connaissance de la capacité thermique de chacun des deuxdits constituants ou de ladite grandeur physique qui y est proportionnelle, on calcule une première différence entre les capacités thermiques de l'échantillon et dudit constituant ou entre lesdites grandeurs physiques qui y sont respectivement proportionnelles, et, une deuxième différence entre les capacités thermiques des deuxdits constituants du matériau ou entre lesdites grandeurs physiques qui y sont respectivement proportionnelles, et, on détermine le pourcentage dudit constituant en calculant le rapport de la première à la deuxième différence.

Les avantageuses dispositions suivantes sont en outre de préférence adoptées:

- pour déterminer la capacité thermique dudit échantillon, on établit la correspondance entre la température d'une première masse de l'échantillon et d'une deuxième masse munie dudit constituant, et, lesdites grandeurs physiques qui sont respectivement proportionnelles à leurs capacités thermiques, puis, pour une température déterminée, on mesure lesdites grandeurs physiques, et, enfin, on détermine la capacité thermique massique de l'échantillon en calculant le rapport d'un premier produit de ladite grandeur physique relative à l'échantillon, par ladite deuxième masse du constituant, par la capacité thermique connue du constituant à un deuxième produit de ladite grandeur physique relative audit constituant par ladite première masse de l'échantillon;

- on acquiert la connaissance de la capacité thermique de chacun desdits constituants ou de ladite grandeur physique qui y est proportionnelle, en réalisant une détermination analogue à celle de la capacité thermique dudit échantillon ou de la grandeur physique qui y est proportionnelle;

- on établit la correspondance entre la température d'une même masse déterminée de chacun desdits constituants et de l'échantillon, et, lesdites grandeurs physiques qui sont respectivement proportionnelles à leurs capacités thermiques, puis, pour une température déterminée, on mesure lesdites grandeurs physiques, et enfin, on détermine ledit pourcentage d'un desdits constituants du matériau en calculant le rapport de la différence des grandeurs physiques relatives à l'échantillon et audit constituant à la différence des grandeurs physiques relatives aux deuxdits constituants.

L'avantage principal des procédés conformes à l'invention réside dans la facilité et la rapidité de leurs mises en oeuvre, par utilisation de calorimètres différentiels, de préférence associés à des machines calculatrices, constituant alors des appareils spécialisés susceptibles, à partir d'une mesure unique, de déterminer le pourcentage recherché.

L'invention sera mieux comprise et des caractéristiques secondaires et leurs avantages apparaîtront au cours de la description de deux réalisations données ci-dessous à titre d'exemple.

Il est entendu que la description et les dessins ne sont donnés qu'à titre indicatif et non limitatif.

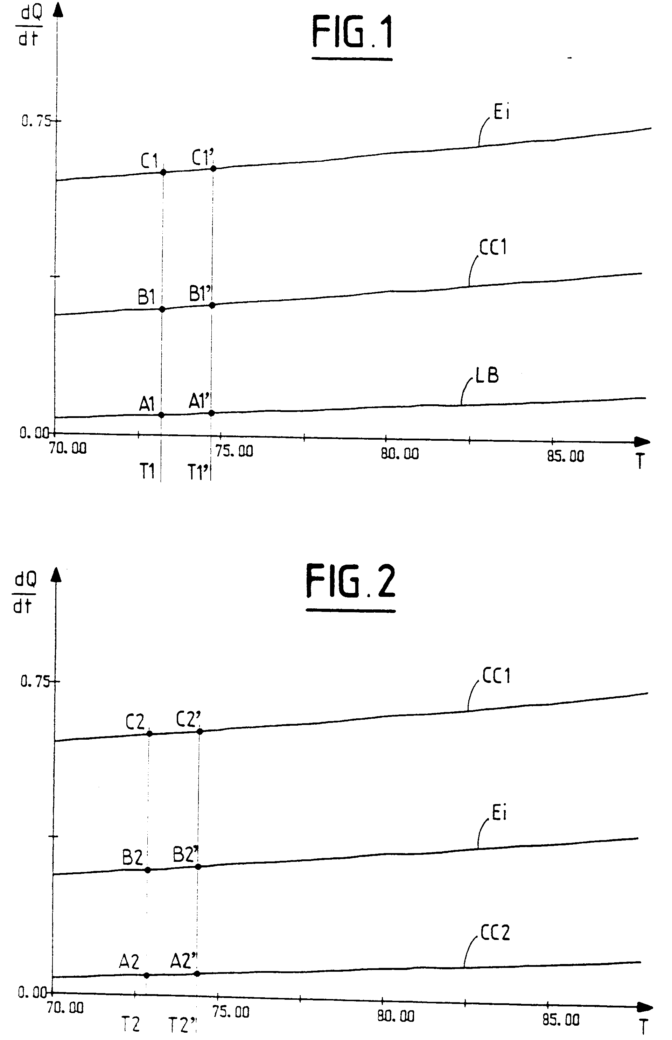

Il sera fait référence aux dessins annexés, dans lesquels les figures 1 et 2 représentent les courbes enregistrées selon deux variantes de procédés conformes à l'invention.

Les deux exemples de mise en oeuvre du procédé conforme à l'invention sont explicités en regard des figures 1 et 2.

L'appareil principal utilisé est un calorimètre différentiel qui permet l'enregistrement des courbes représentées sur les figures de variation en fonction de la température T en degré C de la fonction

$$\frac{dQ}{dt}$$

, dérivée de la quantité de chaleur transférée à un matériau par rapport au temps, en millicalorie/seconde.

Dans les exemples représentés, le calorimètre différentiel utilisé était le type DSC4 du fabricant PERKIN-ELMER.

Pendant une phase préliminaire du procédé, les paramètres suivants ont d'abord été enregistrés:

- Vitesse de montée de température:        20°C/mn

- Vitesse de refroidissement:        320°C/mn

- Température initiale:        70°C

- Température finale:        90°C

- Unités:        millicalorie ou milliwatt

- Echelle:        2 milliwatts

- Sans remise au zéro électrique du signal du calorimètre:        R.A.Z NON

- Réglage du zéro électrique:        ZERO

- Masse de l'échantillon:        20mg

- Tracé en temps réel des courbes de CP.

Les valeurs indiquées de vitesse de montée en température et de vitesse de refroidissement et de masse de l'échantillon sont des valeurs indicatives. Celles des températures initiale et finale ont été choisies de manière que les capacités thermiques CP soient sensiblement constantes.

Les choix de "sans remise au zéro électrique", du "réglage du zéro électrique" et du "tracé en temps réel" des courbes de capacités thermiques ont été effectués pour tenir compte du fait que l'appareil utilisé ne permettait pas l'enregistrement de plusieurs courbes (3 dans les exemples décrits) de capacités thermiques en conservant le même zéro électrique du signal. Il a de ce fait été nécessaire d'enregistrer en temps réel les courbes qui, sans cela, n'auraient pas été sauvegardées. La procédure de mesure adoptée permet ainsi la superposition des courbes au fur et à mesure des analyses.

Les échantillons de matériau dont on souhaite connaître la composition sont analysés les uns à la suite des autres, sans procéder à une réinitialisation de l'appareil entre deux analyses, les courbes étant donc tracées en temps réel.

Selon le premier procédé décrit en regard de la figure 1, une ligne de base LB est acquise et propre à l'appareil utilisé. Les courbes CC1 et EI sont enregistrées et correspondent, l'une CC1 à un premier constituant connu du matériau, l'autre EI à un échantillon du matériau inconnu. Ces trois courbes permettent le calcul de la capacité thermique CPEI de l'échantillon du matériau inconnu, et d'en déduire le pourcentage du premier constituant connu qu'il contient. Il est précisé que, selon ce premier procédé, les masses analysées MCC1 du premier constituant connu et MEI de l'échantillon (dont le pourcentage de la teneur en premier constituant est inconnu) du matériau peuvent avoir des valeurs différentes, CPCC1 étant la capacité thermique, connue, du premier constituant connu du matériau dont on recherche le pourcentage, et, A1 B1 C1 et A1' B1' C1' étant deux droites parallèles à l'axe des ordonnées, correspondant à des températures T1, T1', intersectant les courbes LB, CC1 et EI aux points A1, B1, C1, et, A1', B1', C1', respectivement, l'expression permettant d'abord de calculer CPEI est la suivante:

$$CPEI = \frac{(surface\ A1\ C1\ C1'\ A1') \times MCC1}{(surface\ A1\ B1\ B1'A1') \times MEI} \times CPCC1$$

Le pourcentage PCC1 du constituant connu CC1, que contient l'échantillon du matériau EI, est proportionnel à 100 fois le rapport de la valeur absolue de la différence ICPCC1-CPEII des capacités thermiques du premier constituant connu et de l'échantillon du matériau inconnu divisée par la valeur absolue de la différence ICPCC1-CPCC2I des capacités thermiques connues des premier et deuxième constituants connus dudit matériau:

$$PCC1 = \frac{ICPCC1\text{-}CPEII}{ICPCC1\text{-}CPCC2I} \times 100$$

Selon le deuxième procédé décrit en regard de la figure 2, il est possible de déterminer le pourcentage PCC1 du constituant connu CC1 que contient l'échantillon du matériau inconnu EI sans connaître au préalable les capacités thermiques CPCC1 et CPCC2 des premier et deuxième constituants dudit matériau. Par contre, il est nécessaire de posséder des échantillons de masses égales de chacun des deux constituants connus et du matériau inconnu. Il suffit alors d'enregistrer les trois courbes relatives aux deux constituants connus CC1 et CC2, et, celle relative au matériau inconnu EI. A2 B2 C2 et A2' B2' C2' étant deux droites parallèles, correspondant à des températures T2, T2', à l'axe des données, intersectant les courbes CC2, EI et CC1 aux points A2, B2, C2 et A2', B2', C2', respectivement, l'expression permettant de calculer le pourcentage PCC1 du premier constituant que contient le matériau inconnu est la suivante:

$$PCC1 = \frac{surface\ (B2\ C2\ C2'B2')}{surface\ (A2\ C2\ C2'\ A2')} \times 100$$

En variante, il est également possible de programmer, dans un ordre indifférent, une montée en température du calorimètre, et une mise en palier. Le saut de la courbe observé au moment du passage d'une phase de mesure à l'autre est proportionnel à la capacité thermique, à un facteur correctif près, et est apte à remplacer les longueurs des segments des droites A2 B2 C2, A2', B2', C2', découpés sur ces droites par les courbes CC1, CC2 et EI.

Les exemples précédents, correspondent à des mesures réelles effectuées au moyen du calorimètre différentiel de "PERKIN-ELMER". Il est possible d'optimiser les procédés décrits en n'utilisant de préférence qu'une seule mesure. Selon cette dernière variante, la ligne de base est acquise par l'intermédiaire d'une calibration interne, que possède l'appareil, et les valeurs des capacités thermiques connues CC1 et CC2 des premier et deuxième constituants connus du matériau sont introduites à partir d'un clavier de calculateur, ou encore sont mémorisées au préalable. Avec un tel appareil constitué par un calorimètre différentiel et un calculateur associé, il reste naturellement possible, dans le cas où les capacités thermiques CPCC1 et/ou CPCC2 ne sont pas connues au préalable, de les mesurer au moyen de l'appareil lui-même au cours de mesures préalables.

Les procédés qui viennent d'être décrits, et les appareils qui en permettent la mise en oeuvre sont particulièrement bien adaptés à la détermination de pourcentage de résines et de fibres contenues dans les matériaux composites, ces pourcentages caractérisant usuellement les produits finis.

Alors que les méthodes connues à ce jour (méthodes chimiques par attaques acides, méthodes physiques par pyrolyse, ou mesures de volumes ou de densités) sont souvent longues (plusieurs heures) et parfois, pour certaines d'entre elles inutilisables (l'attaque acide, comme la pyrolyse attaquent par exemple les deux constituants fibres et matrice organique d'un matériau composite), les nouveaux procédés revendiqués permettent des déterminations rapides (5 minutes), et reçoivent toutes les applications dans lesquelles les capacités thermiques des constituants sont différentes; par ailleurs, les échantillons peuvent avoir des petites dimensions (de l'ordre du gramme, ou même inférieures au gramme), peuvent également avoir des formes irrégulières, ce qui est un avantage par rapport à certaines méthodes connues selon lesquelles l'épaisseur de l'échantillon est mesurée.

L'invention n'est pas limitée aux réalisations décrites, mais en couvre au contraire toutes les variantes qui pourraient leur être apportées sans sortir de leur cadre, ni de leur esprit.

**Revendications**

1. Procédé de détermination du pourcentage (PCC1) d'un constituant (CC1) d'un matériau (EI) composé d'au moins deux constituants distincts (CC1, CC2), caractérisé en ce qu'on détermine la capacité thermique (CPEI) d'un échantillon (EI) dudit matériau ou une grandeur physique proportionnelle à cette capacité thermique, et, à partir de la connaissance de la capacité thermique (CPCC1, CPCC2) de chacun des deuxdits constituants (CC1, CC2) ou de ladite grandeur physique qui y est proportionnelle, on calcule une première différence (CPCC1-CPEI) entre les capacités thermiques de l'échantillon (EI) et dudit constituant (CC1) ou entre lesdites grandeurs physiques qui y sont respectivement proportionnelles, et, une deuxième différence (CPCC1-CPCC2) entre les capacités thermiques des deuxdits constituants (CC1, CC2) du matériau ou entre lesdites grandeurs physiques qui y sont respectivement proportionnelles, et, on détermine le pourcentage (PCC1) dudit constituant (CC1) en calculant le rapport de la première à la deuxième différence.

2. Procédé selon la revendication 1, caractérisé en ce que, pour déterminer la capacité thermique (CPEI) dudit échantillon (EI), on établit la correspondance (CC1, CC2, EI) entre la température d'une première masse (MEI) de l'échantillon et d'une deuxième masse (MCC1) dudit constituant, et, lesdites grandeurs physiques qui sont respectivement proportionnelles à leurs capacités thermiques, puis, pour une température déterminée (T1, T1'), on mesure lesdites grandeurs physiques, et enfin, on détermine la capacité thermique massique (CPEI) de l'échantillon en calculant le rapport d'un premier produit de ladite grandeur physique relative à l'échantillon (EI), par ladite deuxième masse (MCC1) du constituant, par la capacité thermique connue (CPCC1) du constituant à un deuxième produit de ladite grandeur physique relative audit constituant (CC1) par ladite première masse (MEI) de l'échantillon.

3. Procédé selon la revendication 1, caractérisé en ce qu'on acquiert la connaissance de la capacité thermique (CPCC1, CPCC2) de chacun desdits constituants ou de ladite grandeur physique qui y est proportionnelle, en réalisant une détermination analogue à celle de la capacité thermique (CPEI) dudit échantillon (EI) ou de la grandeur physique qui y est proportionnelle.

4. Procédé selon la revendication 3, caractérisé en ce qu'on établit la correspondance entre la température (T) d'une même masse déterminée de chacun desdits constituants (CC1, CC2) et de l'échantillon (EI), et, lesdites grandeurs physiques qui sont respectivement proportionnelles à leurs capacités thermiques, puis, pour une température déterminée (T2, T2'), on mesure lesdites grandeurs physiques, et enfin, on détermine ledit pourcentage (PCC1) d'un (CC1) desdits constituants du matériau en calculant le rapport de la différence ICPCC1-CPEII des grandeurs physiques relatives à l'échantillon et audit constituant à la différence des grandeurs physiques relatives aux deuxdits constituants ICPCC1-CPCC2I.

FIG.1

FIG.2

Office européen
des brevets

**RAPPORT DE RECHERCHE EUROPEENNE**

Numero de la demande

EP 95 40 1821

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | US-A-5 099 441 (MAZZIO VICTOR F) 24 Mars 1992 <br> * le document en entier * <br> --- | 1 | G01N25/48 <br> G01N25/18 |
| A | WO-A-82 01248 (HETRA CORP) 15 Avril 1982 <br> * le document en entier * <br> --- | 1 | |
| A | TRAC, TRENDS IN ANALYTICAL CHEMISTRY, vol. 2, no. 4, Avril 1983 CAMBRIDGE GB, pages 88-92, <br> C.TAYLOR 'differential scanning calorimetry and fibre analysis' <br> --- | 1 | |
| A | GB-A-2 075 674 (INST CERCETARI CHIM) 18 Novembre 1981 <br> * le document en entier * <br> --- | 1 | |
| A | US-A-5 052 819 (BARATTA FRANCIS I) 1 Octobre 1991 <br> * le document en entier * <br> ----- | 1 | |

**DOMAINES TECHNIQUES RECHERCHES (Int.Cl.6)**

G01N

Le présent rapport a été établi pour toutes les revendications

| Lieu de la recherche | Date d'achèvement de la recherche | Examinateur |
|---|---|---|
| LA HAYE | 16 Novembre 1995 | Brock, T |